(19) **Europäisches Patentamt**
European Patent Office
Office européen des brevets

(11) **EP 2 292 388 B1**

(12) **EUROPÄISCHE PATENTSCHRIFT**

(45) Veröffentlichungstag und Bekanntmachung des Hinweises auf die Patenterteilung:
**04.04.2012 Patentblatt 2012/14**

(51) Int Cl.:
*B25J 9/16* (2006.01)     *B25J 19/06* (2006.01)
*F16P 3/00* (2006.01)     *F16P 3/08* (2006.01)

(21) Anmeldenummer: **10008576.0**

(22) Anmeldetag: **17.08.2010**

(54) **Verfahren und Vorrichtung zum Stillsetzen eines Manipulators**

Method and device for bringing a manipulator to a standstill

Procédé et dispositif destinés à la commande d'un manipulateur

(84) Benannte Vertragsstaaten:
**AL AT BE BG CH CY CZ DE DK EE ES FI FR GB GR HR HU IE IS IT LI LT LU LV MC MK MT NL NO PL PT RO SE SI SK SM TR**

(30) Priorität: **04.09.2009 DE 102009040145**

(43) Veröffentlichungstag der Anmeldung:
**09.03.2011 Patentblatt 2011/10**

(73) Patentinhaber: **KUKA Laboratories GmbH 86165 Augsburg (DE)**

(72) Erfinder:
• **Aurnhammer, Andreas 81929 München (DE)**

• **Eisensehr, Markus 86153 Augsburg (DE)**
• **Hagenauer, Andreas 86316 Friedberg (DE)**
• **Hüttenhofer, Manfred 86406 Meitingen (DE)**

(74) Vertreter: **Schlotter, Alexander Carolus Paul Wallinger Ricker Schlotter Tostmann Patent- und Rechtsanwälte Zweibrückenstrasse 5-7 80331 München (DE)**

(56) Entgegenhaltungen:
EP-A1- 1 752 702     EP-A1- 1 901 150
EP-A2- 0 179 252     EP-A2- 1 332 841
DE-A1-102008 013 431

**Beschreibung**

Die vorliegende Erfindung betrifft ein Verfahren und eine Vorrichtung zum Stillsetzen eines Manipulators, insbesondere eines Roboters, sowie zum Bestimmen eines Bremsweges des Manipulators.

Insbesondere im Rahmen sicherheitskritischer Roboteranwendungen ist es bekannt, Schutzbereiche, beispielsweise in einem Weltkoordinatensystem, vorzugeben, in die der Roboter mit Gliedern oder Referenzpunkten wie etwa seinem TCP nicht eindringen darf. Wird eine Bereichsverletzung erkannt, wird der Roboter sicher stillgesetzt.

Dabei kann der Roboter jedoch aufgrund seiner Massenträgheiten sowie der Totzeiten und Trägheiten zwischen Bereichsverletzung und Ansprechen der Überwachung noch weiter in den Schutzbereich eindringen.

Die DE 10 2008 013 431 A1 schlägt vor, auf Basis des Abstandes einer detektierten Person und dem Arbeitsbereich einer Maschine und der durchschnittlichen Schrittgeschwindigkeit der Person die maximal zur Verfügung stehende Verzögerungszeit zu bestimmen und den Bremsverlauf entsprechend zu wählen, um die Maschine vor einer Gefährdung stillzusetzen. Die zugehörige Personendetektierung ist jedoch sehr aufwändig.

Die EP 1 752 702 A1 offenbart ein Verfahren und System zur Überwachung von Kollisionen zwischen einem oder mehreren Robotern und mindestens einer Person. Dabei wird die Position der Person erfasst und ständig mit einer Sicherheitszone verglichen, die jedem Roboter zugeordnet ist. Die Sicherheitszone der jeweiligen Roboter ist von vorgegebenen Sicherheitsparametern abhängig.

Aufgabe der vorliegenden Erfindung ist es, den Betrieb von Manipulatoren zu verbessern.

Diese Aufgabe wird durch ein Verfahren mit den Merkmalen des Anspruchs 1 bzw. 2 gelöst. Anspruch 9 stellt eine Vorrichtung, Anspruch 10 bzw. 11 ein Computerprogramm bzw. ein Computerprogrammprodukt, insbesondere einen Datenträger oder ein Speichermedium, zur Durchführung eines erfindungsgemäßen Verfahrens unter Schutz Die Unteransprüche betreffen vorteilhafte Weiterbildungen.

Nach einem ersten Aspekt der vorliegenden Erfindung wird vorgeschlagen, einen Bereich zu überwachen und den Manipulator zu bremsen, vorzugsweise sicher stillzusetzen, wenn erfasst wird, dass er den überwachten Bereich verletzt.

Der Bereich kann beispielsweise in Gelenkkoordinaten des Manipulators oder Weltkoordinaten, etwa einer Roboterzelle, vorgegeben werden. Dazu kann, zum Beispiel auf Basis seiner, gegebenenfalls in Weltkoordinaten transformierten, Gelenkkoordinaten, überwacht werden, ob ein oder mehrere Glieder des Manipulators bzw. manipulatorfeste Referenzpunkte wie sein TCP, sich innerhalb eines unzulässigen Schutzbereichs bzw. außerhalb eines zulässigen Arbeitsbereichs befinden oder nicht. Gleichermaßen können -Positionen solcher,Gliederbzw. Referenzpunkte auch, beispielsweise mittels elektromagnetischer Strahlung wie sichtbarem oder UV-Licht, Radar, Funk oder dergleichen, durch einen Vorrichtung erfasst werden, indem etwa ein oder mehrere Kameras die Pose des Manipulators erfassen oder der Abstand eines oder mehrerer manipulatorfester Referenzpunkte von umgebungsfesten Sendern oder Empfängern erfasst wird.

Nach dem ersten Aspekt der vorliegenden Erfindung wird der überwachte Bereich nun während des Betriebs auf Basis eines Bremsweges des Manipulators variabel vorgegeben. Insbesondere kann er bei längeren Bremswegen vergrößert und/oder bei kürzeren Bremswegen verkleinert werden. Vorzugsweise wird der Bremsweg dazu während des Betriebes, beispielsweise zyklisch, ermittelt und der überwachte Bereich entsprechend aktualisiert.

Der Bremsweg hängt insbesondere von der zu dissipierenden kinetischen Energie des Manipulators ab, die ihrerseits von dessen Geschwindigkeiten, Massen und Trägheitsmomenten abhängt, welche je nach bewegter Traglast wiederum variieren können. Zusätzlich kann der Bremsweg auch durch die Schwerkraft verlängert oder verkürzt werden, je nachdem, ob diese zusätzliche Bremskräfte und -momente induziert oder diesen beschleunigend entgegenwirkt. Weiterhin führen verschiedene Bremskraft-bzw. -momentverläufe aufgrund von Toleranzen, Verschleiß, Erwärmung und dergleichen zu unterschiedlichen Bremswegen.

Dementsprechend kann der Bremsweg nach einer Ausführung während des Betriebs auf Basis eines Modells, welches die Dynamik des Manipulators, insbesondere seine Gewichts- und/oder Trägheitskräfte, und/oder Bremskraft- bzw. -momentverläufe beschreibt, ermittelt und dementsprechend der Bremsweg bestimmt werden. Ist beispielsweise das Massenträgheitsmoment $J$ bezüglich der vertikalen Achse eines einachsigen Roboters mit dem Gelenkwinkel $q$ und sein konstantes Bremsdrehmoment $\tau_o$ bekannt, ergibt sich der Bremsweg $s$ auf Basis des dynamischen Modells

$$J \times d^2q/dt^2 = -\tau \qquad (1)$$

in Abhängigkeit von seiner Anfangsgeschwindigkeit w durch Zeitintegration zu

$$s = (J \times \omega^2)/(2 \times \tau_0) \qquad (2).$$

Bei komplexeren Manipulatoren wie beispielsweise sechsachsigen Industrierobotern ist die Auswertung eines entsprechenden Modells zur Bestimmung des Bremsweges

$$s = f(q, dq/dt, L) \qquad (3)$$

in Abhängigkeit von den Gelenkkoordinaten q, deren ersten zeitlichen Ableitung bzw. Gelenkgeschwindigkeit dq/dt und Traglastparametem L, die neben der Traglastmasse deren Trägheitsmomente und Schwerpunktlage umfassen können, jedoch kaum noch online während des Betriebes möglich.

Daher wird nach einem zweiten Aspekt der vorliegenden Erfindung ein nachfolgend erläutertes Verfahren zur Bestimmen eines Bremsweges eines Manipulators, insbesondere eines Roboters vorgeschlagen, das insbesondere zur Bestimmung des Bremsweges auf Basis eines aktuellen Zustandes während des Betriebs, i.e. online geeignet ist. Erster und zweiter Aspekt sind bevorzugt miteinander kombiniert. Gleichwohl kann der erste Aspekt, wie obige Gleichung (2) zeigt, auch ohne den zweiten Aspekt genutzt werden. Ebenso kann der zweite Aspekt ohne Verwirklichung des ersten Aspekts genutzt werden, beispielsweise zur Bahnplanung und - optimierung, bei der sehr viele Simulationsläufe durchgeführt und für verschiedene Manipulatorzustände Bremswege ermittelt werden müssen.

Nach dem zweiten Aspekt der vorliegenden Erfindung werden vorab, insbesondere numerisch und/oder empirisch, für unterschiedliche Zustände und/oder Bremskraftverläufe des Manipulators Bremswege simuliert.

Ein Zustand kann dabei beispielsweise eine oder mehrere Positionen und/oder Geschwindigkeiten, beispielsweise kartesische Positionen bzw. Geschwindigkeiten von manipulatorfesten Referenzpunkten im Weltkoordinatensystem, oder Gelenkkoordinaten, insbesondere Gelenkwinkeln, bzw. deren zeitlichen Ableitungen, Traglastparameter wie insbesondere Masse, Trägheitsmomenten und/oder Schwerpunktlage der Traglast und dergleichen umfassen. Eine numerische Vorabsimulation kann insbesondere durch die Zeitintegration eines dynamischen Modells des Manipulators erfolgen, wie es rein exemplarisch in Gl. (1) angeben ist, eine empirische durch Testläufe und deren Auswertung.

Ein Bremskraftverlauf kann beispielsweise die Größe einer Bremskraft in Abhängigkeit von dem Zustand, insbesondere den Gelenkkoordinaten und/oder deren zeitlichen Ableitungen, der Zeit und/oder weiterer Parameter wie Haft- und Gleitreibungskoeffizienten umfassen. Dabei werden zur kompakteren Darstellung antiparallele Bremskraftpaare, i.e. Bremsmomente, welche auf eine Drehachse des Manipulators wirken, verallgemeinernd ebenfalls als Bremskräfte bezeichnet. Ein Bremskraftverlauf kann daher beispielsweise in der Form

$$\tau_i = \mu_0 \times (dq_i/dt) \,/\, |\, dq_i/dt \,| + \mu \times (dq_i/dt) \qquad (4)$$

mit dem auf die Achse i wirkenden Bremsmoment $\tau_i$ und dem Haft- bzw. Gleitreibungskoeffizienten $\mu_o$, $\mu < 0$ vorgegeben sein. Anstelle unterschiedlicher Bremskraftverläufe kann für die Variation der Zustände auch jeweils dergleiche Bremskraftverlauf verwendet werden, beispielsweise ein minimaler Bremskraftverlauf für jede Achse, so dass gewährleistet ist, dass der tatsächliche Bremskraftverlauf höher liegt, der tatsächliche Bremsweg mithin stets kürzer als der simulierte ist.

Erfindungsgemäß wird dann auf Basis dieser vorab simulierten Bremswege eine obere Schranke für den Bremsweg abgeschätzt. Dies erfolgt, insbesondere bei Kombination mit dem-ersten Aspekt, während des Betriebs des Manipulators, vorzugsweise im Wesentlichen in Echtzeit.

Durch die erfindungsgemäße Abschätzung einer oberen Schranke kann auf die aufwändige exakte Auswertung des dynamischen Modells oder entsprechende Testläufe verzichtet werden, wenn der aktuelle Bremsweg bestimmt werden muss. Beispielsweise können für einen aktuellen Zustand ein oder mehrere nächstliegende simulierte Zustände herangezogen und aus den für diese bestimmten Bremswegen eine oberer Schranke für den aktuellen Zustand abgeschätzt, beispielsweise interoder extrapoliert werden.

Bereits anhand des vorstehend erläuterten stark vereinfachten Beispiels mit einer vertikalen Drehachse ist ersichtlich, dass der Bremsweg unter anderem von Trägheitsparametern einer Traglast des Manipulators, in Gl. (1) von dem Trägheitsmoment J, abhängt. Diese variieren je nach bewegter Traglast, etwa gegriffener Nutzlast, unterschiedlichen Werkzeugen etc., teilweise stark.

Daher wird in einer bevorzugten Ausführung der vorliegenden Erfindung der Bremswege für unterschiedliche Zustände des Manipulators für eine Referenztraglast und/oder Referenztraglastanordnung simuliert. Eine Referenztraglast kann dementsprechend beispielsweise durch Werte für Masse und Trägheitsmomente, eine Referenztraglastanordnung entsprechend zum Beispiel durch die Schwerpunktlage der Traglast zum TCP oder den Bewegungsachsen des Manipulators vorgegeben werden.

Sofern eine tatsächliche Traglast im Betrieb zu stark von der in Vorabsimulationen zugrunde gelegten Referenztraglast abweicht, verfälscht dies die abgeschätzte oberer Schranke für den Bremsweg mit der Folge, dass dieser länger als erforderlich oder zu kurz wird. Daher wird in einer bevorzugten Weiterbildung ein Bremsweg, der für eine Referenztraglast und/oder Referenztraglastanordnung vorab simuliert wurde, auf eine tatsächliche Traglast und/oder Traglastanordnung skaliert, um die obere Schranke abzuschätzen.

Dies kann beispielsweise dadurch erfolgen, dasseine Skalierungsgröße zum einen für die Referenztraglast und/oder für die Referenztraglastanordnung, zum anderen für die tatsächliche Traglast bzw. Traglastanordnung simuliert und aus dem Quotienten beider Skalierungsgrößen jeweils ein Skalierfaktor gebildet wird, mit dem der abgeschätzte Bremsweg beispielsweise multipliziert wird.

Da bei Abschätzung auf Basis einer Referenztraglast und Skalierung des Bremsweges mit einem oder mehreren Skalierungsfaktoren noch nicht zwingend gewährleistet ist, dass der Bremsweg bei einer tatsächlichen Traglast die so abgeschätzte obere Schranke nicht übersteigt, werden in einer bevorzugten Weiterbildung Bremsweg für unterschiedliche Zustände des Manipulators zusätzlich für eine oder mehrere von der Referenztraglast und/oder Referenztraglastanordnung verschiedene Traglasten bzw. Traglastanordnungen vorab simuliert. Wird dabei ein längerer Bremsweg ermittelt als derjenige, der sich auf Basis der Referenztraglast und der Skalierung ergibt, wird die obere Schranke entsprechend heraufgesetzt. Hierzu kann gleichermaßen auch der Bremsweg, der für die von der Referenztraglast (anordnung) verschiedene Traglast(anordnung) simuliert wurde, durch die Inverse des bzw. der Skalierfaktoren auf den Bremsweg für die Referenztraglast(anordnung) abgebildet und somit als weiterer Simulationslauf mit Referenztraglast (anordnung) behandelt werden.

Beispielsweise bei einem üblichen sechsachsigen Knickarmroboter weist sein Zustandsvektor seiner Gelenkwinkel und Gelenkwinkelgeschwindigkeiten bereits 12 dimensionen auf. Daher wird in einer bevorzugten Ausführung der vorliegenden Erfindung ein mehrdimensionaler Zustand des Manipulators auf eine niedrigerdimensionale, insbesondere skalare Größe bzw. Gesamtgeschwindigkeit abgebildet bzw. transformiert. Hierzu kann beispielsweise eine gewichtete Summe der Beträge oder Potenzen der Gelenkgeschwindigkeiten gebildet werden. Da der Bremsweg stark von der kinetischen Energie des Manipulators abhängt und diese sich bei Knickarmrobotem aus der Summe der Trägheitsmomente um die-einzelnen Achsen, multipliziert mit den halben Quadraten der entsprechenden Gelenkwinkelgeschwindigkeiten ergeben, wird in einer bevorzugten Ausführung der durch die Gelenkkoordinaten und deren erste zeitliche Ableitung gegebene Zustand auf eine skalare Gesamtgeschwindigkeit transformiert, die im Wesentlichen der kinetischen Energie in diesem Zustand entspricht, wobei zur Vereinfachung auch jeweils Maximalwerte für Lastparameter wie Trägheitsmomente und/oder Schwerpunktabstände zugrundegelegt werden können.

Insbesondere, wenn zur abschätzung der oberen Schranke ein mehrdimensionaler Zustand des Manipulators auf eine skalare Gesamtgeschwindigkeit transformiert wird, kann aus allen Simulationen für unterschiedliche Zustände des Manipulators, die innerhalb einer vorgegebenen Diskretisierung bzw. Toleranz auf dieselbe skalare Gesamtgeschwindigkeit transformiert werden, der längste Bremsweg als obere Schranke für diese skalare Gesamtgeschwindigkeit ausgewählt werden. Der maximale Bremsweg kann dann beispielsweise durch einen Polygonzug über der skalaren Gesamtgeschwindigkeit abgespeichert werden.

In einer bevorzugten Ausführung werden die Vorabsimulationen typspezifisch für verschiedene Manipulatoren durchgeführt, die sich in ihrer Konfiguration, beispielsweise Achsanordnung, Achsabständen, Massen, Trägheitsmomenten und anderen Maschinendaten unterscheiden. Die Bestimmung des Bremsweges für einen bestimmten Manipulator erfolgt dann auf Basis der für diesen Manipulatortyp vorab simulierten Bremswege.

Weitere Vorteile und Merkmale ergeben sich aus den Unteransprüchen und den Ausführungsbeispielen. Hierzu zeigt, teilweise schematisiert:

Fig. 1, 2:   Schutzbereich eines Roboter, die nach einer Ausführung der vorliegenden Erfindung vorgegeben werden; und

Fig. 3:   den Ablauf eines erfindungsgemäßen Verfahrens zur Vorgabe der-Schutzbereiche in Fig. 1, 2.

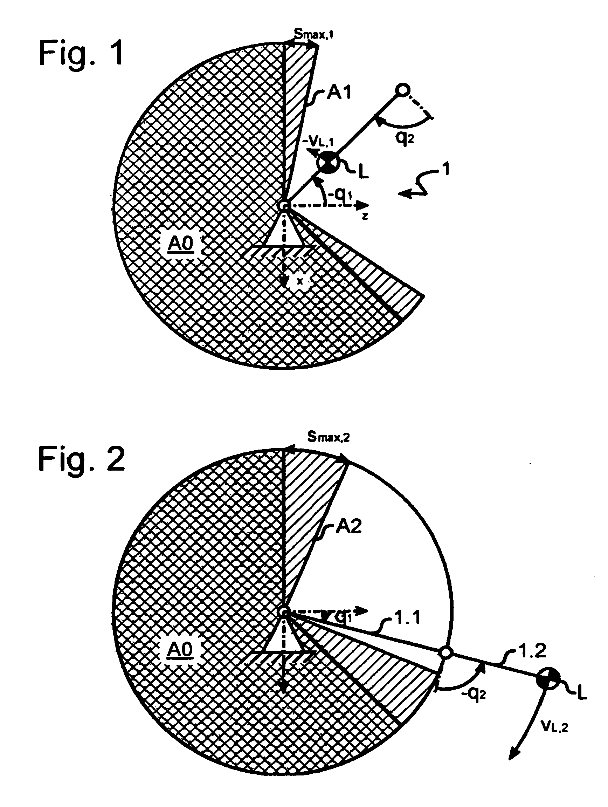

Zur besseren Übersicht wird die vorliegende Erfindung nachfolgend anhand eines vereinfachten Beispiels erläutert. Hierzu zeigen Fig. 1, 2 einen zweiachsigen Knickarmroboter 1 mit zwei Gliedern 1.1, 1.2 (vgl. Fig. 2), welche über Drehgelenke miteinander verbunden sind, deren Gelenkwinkel $q_1$ bzw. $q_2$ über Antriebe verstellbar sind, um eine Traglast L zu bewegen, deren Trägheitsparameter, insbesondere Masse m, Schwerpunktlage $r_{TCP,L}$ und Trägheitsmomente bzw. - tensor $J_L$ bezüglich des Tool Center Points TCP bekannt sind.

In Fig. 1 bewegt der Roboter 1 die Traglast L mit eingeklapptem Arm 1.2 ($q_2 = 90°$) auf einer Kreisbahn mit der kartesischen Geschwindigkeit $V_{L,1}$ gegen den Uhrzeigersinn nach oben (v < 0), in Fig. 2 mit ausgeklapptem Arm 1.2 und höherer Winkelgeschwindigkeit $dq_1/dt$ nach unten.

Um Bedienpersonat und Einrichtung zu schützen sowie Selbstkollisionen zu vermeiden, ist in einem Weltkoordinatensystem, welches in der Basis des Roboters 1 angeordnet und in den Fig. 1, 2 strichpunktiert eingezeichnet ist, ein in den Figuren kreuzschraffiert angedeuteter Schutzbereich A0 definiert, in den der Roboter 1, beispielsweise mit seinem TCP oder mit keinem seiner Glieder 1.1, 1.2, eindringen darf. Wird, beispielsweise anhand der Gelenkwinkel $q = (q_1, q_2)$ festgestellt, dass der Roboter 1 den Schutzbereich A0 verletzt, wird er gebremst und sicher stillgesetzt.

Um ein weiteres Eindringen des Roboters 1 in den Schutzbereich A0 zu verhindern, nachdem er dessen Grenze verletzt hat, wird dieser auf Basis eines maximalen Bremsweges $s_{max}$ des Roboters vergrößert. In Fig. 1, 2 ist exemplarisch der kreissegmentförmige Schutzbereich A0 an seinen beiden dem zulässigen Arbeitsraumdes Roboters 1 zugewandten Radien (rechts in Fig. 1, 2) symmetrisch um ein jeweils schraffiert dargestelltes Kreissegment A1 (Fig. 1) bzw. A2 (Fig. 2) erweitert, dessen Winkelbereich von dem maximalen Bremsweg $s_{max,1}$ bzw. $s_{max,2} > s_{max,1}$ des Roboters 1 abhängt. In einer anderen, nicht dargestellten Ausführung erfolgt die Vergrößerung in Abhängigkeit des Bewegungszustandes des Roboters, beispielsweise nur an Außenseiten des Schutzbereiches, deren nach außen gerichtete Normale mit der Geschwindigkeit des TCPs oder eines Robotergliedes einen Winkel größer 90° einschließt bzw. denen sich ein Teil des Roboters nähert, in Fig. 1 also nur durch Hinzufügen des oberen, in Fig. 2 durch Hinzufügen des unteren Kreissegments.

Man erkennt an dem vereinfachten Beispiel, dass der maximale Bremsweg vom Zustand des Roboters abhängt: während seine beim Abbremsen zu vernichtende kinetische Energie in Fig. 1 geringer ist, verlängert sich der Bremsweg in Fig. 2 aufgrund des ausgeklappten Armes, der höheren Winkelgeschwindigkeit $dq_1/dt$ sowie der unterstützenden Gravitationswirkung.

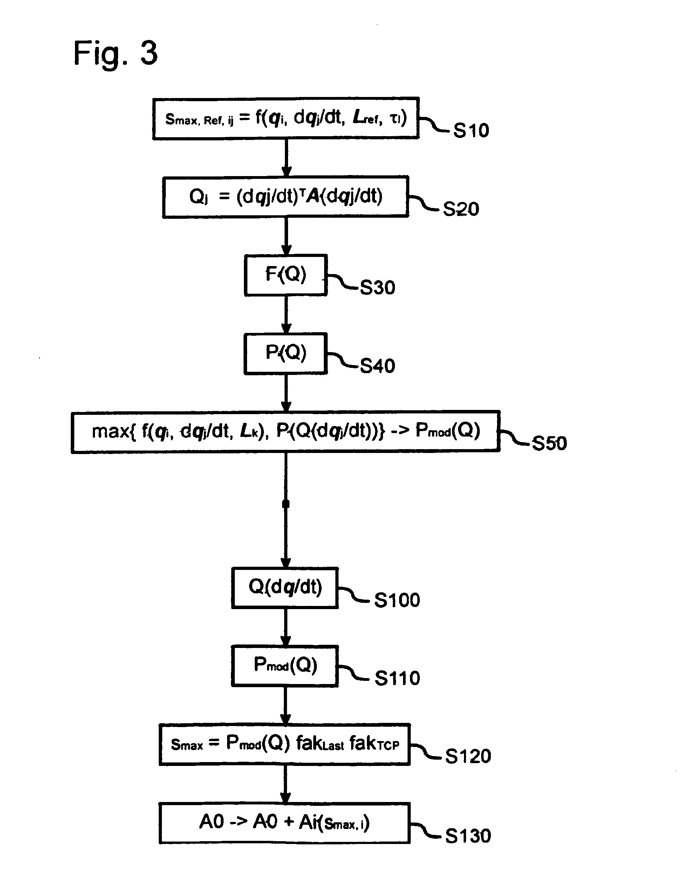

Für den Bremsweg $s_{max}$ wird daher während des Betriebs online in Abhängigkeit des Zustandes des Roboters 1 entsprechend eines in Fig. 3 dargestellten Verfahrens eine obere Schranke abgeschätzt.

Hierzu werden offline vorab für unterschiedliche Robotertypen, etwa den in Fig. 1, 2 skizzierten zweiachsigen Roboter mit Gliedern 1.1, 1.2 bekannter Länge und Massenverteilung, jeweils für eine Referenztraglast $L_{Ref}$ in einer Referenzanordnung in einem Schritt S10 für verschiedene Getenkwinkel $q_i$ und -geschwindigkeiten $dq_j/dt = (dq_1^j/dt, dq_2^j/dt,...)$ auf Basis eines dynamischen Modells des Roboters, vorzugsweise unter Berücksichtigung verschiedene Achsbremsmomentverläufe $\tau_1(q, dq/dt, t)$ oder mit einem für alle Zustandsvariationen gleichen, vorzugsweise minimalen, fixen Bremsmomentenverlauf für jede Achse, jeweils dessen maximaler Bremsweg ermittelt bzw. abgeschätzt:

$$s_{max,\, Ref,\, ij} = f(q_i, dq_j/dt, L_{Ref}, \tau_l); \quad i=1,2,\ldots;\ j=1, 2,\ldots;\ l=1, 2,\ldots \qquad (5)$$

Alternativ können diese maximalen Bremswege auch empirisch ermittelt werden.

Diese Gelenkwinkelgeschwindigkeiten $dq_j/dt$ werden auch auf eine skalare Gesamtgeschwindigkeit $Q_j$ abgebildet, die proportional zur Summe von gewichteten Potenzen der einzelnen Gelenkwinkelgeschwindigkeiten $dq_k/dt$ ist (Schritt S20):

$$Q_j = a_1 \times (dq_1^j/dt)^2 + a_2 \times (dq_2^j/dt)^2 + \ldots$$

$$= (dq^j/dt)^T \times A \times (dq^j/dt) \qquad (6)$$

Dann wird in einem Schritt S30 unter allen simulierten Gelenkwinkelgeschwindigkeiten $dq/dt$, die innerhalb einer vorgegeben Diskretisierung $\theta$ auf dieselbe Gesamtgeschwindigkeit $Q$ abgebildet werden, der jeweils maximale der simulierten Bremswege $s_{max,\, Ref,\, ij}$ ausgewählt:

$$F(x) = \max\{f(q_i, dq_j/dt, L_{Ref})|\ Q(dq_j/dt) = x \pm \delta\} \qquad (7)$$

wobei "$\max\{Y(x)|\ Z(x)=X\}$" in fachüblicher Weise das Maximum aller Werte Y bezeichnet, deren Argument x die Eigenschaft $Z(x)=X$ aufweist.

Diese auf die skalare Gesamtgeschwindigkeit Q bezogenen maximalen Bremswege F werden nun in einem Schritt S40 auf einen Polygonzug P abgebildet, der stets wenigstens den Maximalwert aller maximalen Bremswege F in einem Diskretisierungsintervall·$Q_k \leq Q \leq Q_{k+1}$ aufweist, so dass gilt:

$$Q_k \leq Q \leq Q_{k+1} \Rightarrow P(Q) \geq F(Q). \qquad (8)$$

Dieser Polygonzug liefert damit eine leicht auswertbare Abschätzung für den maximalen Bremsweg eines Roboters des zugrundeliegenden Typs mit.einer Referenztraglast $L_{Ref}$ in einer Referenzanordnung.

Zur Abschätzung des im Betrieb auftretenden maximalen Bremswegs wird dieser Wert noch von den Referenzwerten auf die tatsächliche Traglast und ihre Anordnung skaliert. Hierzu wird der Wert einerseits mit einem Skalierungsfaktor $fak_{Last}$ multipliziert, der sich aus dem Quotienten der Werte gemäß (6) unter Zugrundelegung tatsächlicher Traglastparameter, dividiert durch Werte gemäß (6) unter Zugrundelegung der Referenzlastparameter ergibt. Um diese Auswertung zu erleichtern, werden jeweils Maximalwerte für die Abstände des Traglastschwerpunktes zu den einzelnen Bewegungsachsen des Roboters gewählt, beispielsweise $J_{y,L} + (I_{TCP} + I_{1.1} + I_{1.2})^2 \times m_L$ mit dem Trägheitsmoment $J_{y,L}$ der Last um ihren Schwerpunkt, dem Abstand $I_{TCP}$ vom diesem zum Flansch des Roboters, dessen Gliedlängen $I_{1.1}$, $I_{1.2}$ sowie der Masse $m_L$ der Nutzlast.

Zusätzlich wird der Wert mit einem Skalierungsfaktor $fak_{TCP}$ multipliziert, der sich aus dem Quotienten einer Hilfsfunktion für die geometrischen Maße des tatsächlichen TCPs, dividiert durch dieselbe Hilfsfunktion für die Maße eines Referenz-TCP ergibt, wobei die Hilfsfunktion ihrerseits der über alle Achsen des Roboters gebildeten Summe der Quotienten aus Abstand des TCP zu einer Achse, multipliziert mit deren Geschwindigkeitsquadrat, dividiert durch die Winkelbeschleunigung dieser Achse entspricht.

Abschließend werden in einem Schritt S50 offline Simulationen mit verschiedenen Traglasten und Traglastanordnungen $L_k$ durchgeführt und die dabei erhaltenen maximalen Bremswege durch Division mit den vorstehend erläuterten Skalierungsfaktoren $fak_{Last}$, $fak_{TCP}$ auf die Referenztraglast bzw. anordnung zurückskaliert. Ergibt sich dabei für eine oder mehrere Gesamtgeschwindigkeiten ein höherer Wert im Vergleich zu dem auf Basis der Referenztraglast bzw. -anordnung bestimmten Polygonzug, wird dieser entsprechend zu $P_{mod}$ modifiziert, so dass er in Intervallen, in denen die Simulationen mit von der Referenzkonfiguration verschiedenen Traglasten und Traglastanordnungen größere maximale Bremswege ergeben, stets diese höheren Werte aufweist. Alternativ können die Simulationen mit verschiedenen Traglasten und Traglastanordnungen $L_k$ auch vor, mit oder nach den Schritten S10, S20 durchgeführt werden und liefefen dann weitere, durch die Rückskalierung auf die Referenztraglast bezogene, Bremswege F(Q), die in Schritt S40 bei der Bildung des Polygonzuges P(Q) eingehen.

Im online-Betrieb wird nun eine obere Schranke für den maximalen Bremsweg $s_{max}$ abgeschätzt. Hierzu wird in einem zyklisch wiederholten Schritt S100 die aktuelle Gesamtgeschwindigkeit Q für den aktuellen Zustand gemäß (5) ermittelt, mit dieser aus dem modifizierten Polygonzug $P_{mod}(Q)$ in Schritt S110 ein maximaler Referenzbremsweg ermittelt und dieser in einem Schritt S120 mit den Skalierungsfaktoren $fak_{Last}$, $fak_{TCP}$ multipliziert. Auf Basis des solcherart abgeschätzten maximalen Bremswegs $s_{max}$ wird in einem Schritt S130 in der eingangs erläuterten Weise der Schutzbereich A0 erweitert, wobei beispielsweise der Winkel des vergrößernden Kreissegmentes A1 bzw. A2 proportional zum maximalen Bremsweg $s_{max}$ gewählt wird.

Im Ausführungsbeispiel führt die aufgrund des ausgeklappten Armes und der größeren kartesischen Geschwindigkeit $V_{L,2}$ höhere kinetische-Energie und die beschleunigende Gravitationskomponente der in Fig. 2 dargestellten Konfiguration zu einem größeren abgeschätzten maximalen Bremsweg $s_{max}$ und damit zu einer größeren Vergrößerung A2 des Schutzbereichs A0 als bei der in Fig. 1 dargestellten Konfiguration mit eingeklappten Arm und zusätzlich bremsender Gravitationskomponente. Dadurch wird sichergestellt, dass der Roboter vor dem eigentlichen Schutzbereich A0 zum Stillstand kommt, wenn er im Zustand der Fig. 1 die obere-Grenze des Bereichs A1, im Zustand der Fig. 2 die untere Grenze des Bereichs A2 überschreitet.

Auf diese Weise kann in rechentechnisch schnell und einfach auszuwertender Weise eine obere Schranke für den maximalen Bremsweg abgeschätzt und der Schutzbereich auf Basis dieser Abschätzung vergrößert werden.

Bezugszeichenliste

| 1 | Roboter |
|---|---|
| 1.1, 1.2 | Roboterglieder |
| A0, A1, A2 | Schutzbereich |
| L | Nutzlast |

$S_{max}$       maximaler Bremsweg
$q_1, q_2$       Gelenkwinkel

**Patentansprüche**

1. Verfahren zum Stillsetzen eines Manipulators, insbesondere eines Roboters (1), mit den Schritten:

   Überwachen eines parametrierbaren Bereichs (A0; A1; A2); und
   Bremsen des Manipulators (1) bei einer Bereichsverletzung;
   **dadurch gekennzeichnet, dass** der überwachte Bereich während des Betriebs auf Basis eines Bremsweges ($s_{max}$) des Manipulators variabel vorgegeben wird (S130),
   wobei der Bremsweg bestimmt wird durch.
   Vorabsimulation von Bremswegen für unterschiedliche Zustände (q, dq/dt, L) und/oder Bremskraftverläufe ($\tau$) des Manipulators (S10); und
   Abschätzen einer oberen Schranke als Bremsweg ($s_{max}$) auf Basis der vorab simulierten Bremsweges (S120).

2. Verfahren nach Anspruch 1, **dadurch gekennzeichnet, dass** Bremswege für unterschiedliche Zustände (q, dq/dt) und/oder Bremskraftverläufe ($\tau$) des Manipulators jeweils für eine Referenztraglast und/oder Referenztraglastanordnung ($L_{Ref}$) vorab simuliert werden (S10).

3. Verfahren nach Anspruch 2, **dadurch gekennzeichnet, dass** Bremswege, die für eine Referenztraglast und/oder Referenztraglastanordnung ($L_{Ref}$) vorab simuliert werden, auf eine tatsächliche Traglast und/oder Traglastanordnung (L) skaliert werden (S120).

4. Verfahren nach einem der vorhergehenden Ansprüche 2 bis 3, **dadurch gekennzeichnet, dass** Bremswege für unterschiedliche Zustände (q, dq/dt) und/oder Bremskraftverläufe ($\tau$) des Manipulators zusätzlich für von der Referenztraglast und/oder Referenztraglastanordnung verschiedene Traglasten bzw. Traglastanordnungen ($L_k$) vorab simuliert werden (S50).

5. Verfahren nach einem der vorhergehenden Ansprüche 2 bis 4, **dadurch gekennzeichnet, dass** mehrdimensionale Zustände (dq/dt) des Manipulators auf eine niedrigerdimensionale, insbesondere skalare Größe (Q) abgebildet werden, bezüglich der der Bremsweg bestimmt wird (S20,S100).

6. Verfahren nach einem der vorhergehenden Ansprüche 2 bis 5, **dadurch gekennzeichnet, dass** die obere Schranke auf Basis eines Polygonzuges (P) bestimmt wird (S40, S110).

7. Verfahren nach einem der vorhergehenden Ansprüche 2 bis 6, **dadurch gekennzeichnet, dass** der Bremsweg auf Basis von Maximalwerten für Lastparameter abgeschätzt wird.

8. Vorrichtung zum Stillsetzen eines Manipulators, insbesondere eines Roboters(1), mit einer Rechenvorrichtung, die zur Durchführung eines Verfahrens nach einem der vorhergehenden Ansprüche eingerichtet ist.

9. Computerprogramm, dass ein Verfahren nach einem der Ansprüche 1 bis 7 ausführt, wenn es in einer Rechenvorrichtung nach Anspruch 8 abläuft.

10. Speichermedium mit Programmcode, der auf einem maschinenlesbaren Träger gespeichert ist und ein Computerprogramm nach Anspruch 9 umfasst.

**Claims**

1. Method to stop a manipulator, particularly a robot (1), comprising the following steps:

   monitoring a parameterizable area (A0; A1; A2); and
   braking of the manipulator (1) if an area violation occurs;
   **characterized in that**, during operation the monitored area is variably commanded on basis of a braking distance ($s_{max}$) of the manipulator (S130),

wherein the braking distance is determined by:

prior simulation of braking distances in advance for different states (q, dq/dt, L) and/or braking force functions (τ) of the manipulator (S10); and

estimating an upper limit as braking distance ($s_{max}$) on basis of the braking distances simulated in advance (S120).

2. Method according to claim 1, **characterized in that**, the braking distances for different states (q, dq/dt) and/or braking force functions (τ) of the manipulator are simulated in advance for a reference payload and/or a reference payload arrangement ($L_{Ref}$) respectively (S10).

3. Method according to claim 2, **characterized in that**, the braking distances, which are simulated in advance for a reference payload and/or a reference payload arrangement ($L_{Ref}$), are scaled to a real payload and/or payload arrangement (L) (S120).

4. Method according to one of the preceding claims 2 to 3, **characterized in that** braking distances for different states (q, dq/dt) and/or braking force functions (τ) of the manipulator are additionally simulated in advance for payloads and/or payload arrangements ($L_k$) respectively which are different from the reference payload and/or the reference payload arrangement respectively (S50).

5. Method according to one of the preceding claims 2 to 4, **characterized in that** multidimensional states (dq/dt) of the manipulator are mapped to a lower dimensional, particularly scalar quantity (Q), according to which the braking distance is determined (S20, S100).

6. Method according to one of the preceding claims 2 to 5, **characterized in that** the upper limit is determined on basis of a polygon path (P) (S40, S110).

7. Method according to one of the preceding claims 2 to 6, **characterized in that** the braking distance is estimated on basis of maximum values for load parameters.

8. Apparatus to stop a manipulator, particularly a robot (1), with a calculating apparatus, which is set up to perform a method according to one of the preceding claims.

9. Computer programm, which performs a method according to one of the claims 1 to 7, if it runs in a calculating apparatus according to claim 8.

10. Storage medium with programming code, which is stored on a machine readable carrier comprising a computer programm according to claim 9.

**Revendications**

1. Procédé pour arrêter un manipulateur, en particulier un robot (1), comprenant les étapes suivantes :

surveiller une région paramétrable (A0 ; A1; A2) ; et

freiner le manipulateur (1) en présence d'un franchissement de la région ;

**caractérisé en ce que**, pendant le fonctionnement, la région surveillée est prédéfinie (S130) de façon variable sur la base d'une course de freinage ($s_{max}$) du manipulateur, la course de freinage étant établie par :

simulation préalable de différents états (q, dq/dt,L) et/ou profils de force freinage (r) du manipulateur (S10) ; et

évaluation d'une limite supérieure en tant que course de freinage ($s_{max}$) sur la base des courses de freinage simulées préalablement (S120).

2. Procédé selon la revendication 1, **caractérisé en ce que** des courses de freinage sont simulées préalablement (S10) pour différents états (q, dq/dt) et/ou profils de force de freinage (r)du manipulateur, dans chaque cas pour une charge de référence et/ou prescription de charge de référence ($L_{Ref}$).

3. Procédé selon la revendication 2, **caractérisé en ce que** des courses de freinage qui sont simulées préalablement pour une charge de référence et/ou prescription de charge de référence ($L_{Ref}$) sont mises à l'échelle pour une charge et/ou prescription de charge (L) effective.

**4.** Procédé selon une des revendications précédentes 2 à 3, **caractérisé en ce que** des courses de freinage pour différents états (q, dq/dt) et/ou profils de force de freinage (r) du manipulateur sont simulées préalablement(S50), en supplément pour des charges ou prescriptions de charge ($L_k$) qui sont différentes de la charge de référence et/ou prescription de charge de référence.

**5.** Procédé selon une des revendications précédentes 2 à 4, **caractérisé en ce que** des états pluridimensionnels (dq/dt) du manipulateur sont représentés dans une grandeur de moindre dimension, en particulier dans une grandeur scalaire (Q) par rapport à laquelle la course de freinage est déterminée (S20, S100).

**6.** Procédé selon une des revendications précédentes 2 à 5, **caractérisé en ce que** la limite supérieure est déterminée (S20, S100) sur la base d'un cheminement polygonal (P).

**7.** Procédé selon une des revendications précédentes 2 à 6, **caractérisé en ce que** la course de freinage est évaluée sur la base de valeurs maximales pour les paramètres de charge.

**8.** Dispositif pour arrêter un manipulateur, en particulier un robot (1), comprenant un dispositif de calcul qui est conçu pour la mise en oeuvre d'un procédé selon une des revendications précédentes.

**9.** Programme d'ordinateur qui met en oeuvre un procédé selon une des revendications 1 à 7 lorsqu'il est exécuté dans un dispositif de calcul selon la revendication 8.

**10.** Support d'enregistrement contenant un code de programme qui est enregistré sur un support lisible par ordinateur et qui comprend un programme d'ordinateur selon la revendication 9.

Fig. 1

Fig. 2

# Fig. 3

$$S_{max, Ref, ij} = f(\boldsymbol{q}_i, d\boldsymbol{q}_j/dt, \boldsymbol{L}_{ref}, \tau_I)$$ — S10

$$Q_j = (d\boldsymbol{q}_j/dt)^T \boldsymbol{A} (d\boldsymbol{q}_j/dt)$$ — S20

$$F(Q)$$ — S30

$$P(Q)$$ — S40

$$\max\{ f(\boldsymbol{q}_i, d\boldsymbol{q}_j/dt, \boldsymbol{L}_k), P(Q(d\boldsymbol{q}_j/dt))\} \rightarrow P_{mod}(Q)$$ — S50

$$Q(d\boldsymbol{q}/dt)$$ — S100

$$P_{mod}(Q)$$ — S110

$$S_{max} = P_{mod}(Q)\, fak_{Last}\, fak_{TCP}$$ — S120

$$A0 \rightarrow A0 + Ai(S_{max, i})$$ — S130

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102008013431 A1
- EP 1752702 A1